# EUROPÄISCHE PATENTANMELDUNG

(11) **EP 1 717 702 A2**
(43) Veröffentlichungstag der Anmeldung: **02.11.2006**
(21) Anmeldenummer: 06005560.5
(22) Anmeldetag: 17.03.2006
(51) Int. Cl.: G06F 9/48

(54) **Steuerung der Programmausführung in einem ressourcenbeschränkten System**

(30) Priorität: 26.04.2005 DE 102005019260
(71) Anmelder: Giesecke & Devrient GmbH, 81677 München (DE)
(72) Erfinder: Effing, Wolfgang, 85659 Forsten (DE); Spitz, Stefan Dr., 81245 München (DE); Kolzenburg, Ulrich, 85540 Haar (DE)

(57) **Zusammenfassung**

Bei einem Verfahren zur Steuerung der Programmausführung in einem ressourcenbeschränkten System wird in Reaktion auf eine Anforderung eines berechtigten Prozesses (26x) ein Scheduling-Verfahren eines multitasking- und/ oder multithreadingfähigen Betriebssystems (18) auf eine über eine Prozesspriorisierung hinausgehende Weise verändert. Ein ressourcenbeschränktes System und ein Computerprogrammprodukt weisen entsprechende Merkmale auf. Durch die Erfindung wird ein Mechanismizs zur besonders effizienten und/oder sicheren Steuerung der Programmausführung bei ressourcenbeschränkten Systemen geschaffen.

## Beschreibung

Die Erfindungbetrifft allgemein das technische Gebiet des Steuerns der Programmausführung in einem ressourcenbeschränkten System und insbesondere die auch als *Scheduling* bekannte Zuteilung von Programmausführungsressourcen an auszuführende Prozesse. Die Erfindung eignet sich zur Verwendung bei ressourcenbeschränkten Systemen wie z.B. eingebetteten Systemen (*Embedded Systems*) und tragbaren Datenträgern. Ein tragbarer Datenträger im Sinne des vorliegenden Dokuments kann insbesondere eine Chipkarte (*Smart Card*) in unterschiedlichen Bauformen oder ein Chipmodul (*Token*) sein.

Tragbare Datenträger werden mit immer mehr Speicherplatz und immer größerer Rechenleistung hergestellt. Bei modernen tragbaren Datenträgern erreicht die Leistungsfähigkeit der Hardware einen Bereich, der prinzipiell die Verwendung von multitasking- und/ oder multithreadingfähigen Betriebssystemen gestattet. So wird gegenwärtig in einem Projekt der Giesecke & Devrient GmbH untersucht, inwieweit ein UNIX®-artiges Betriebssystem - wie z.B. das unter der Marke Linux® bekannte Betriebssystem - in einem modernen tragbaren Datenträger implementiert werden kann.

Das bei dem Linux-System verwendete Scheduling-Verfahren ist in Kapitel 11 des Buches *"*Understanding the Linux Kernel" von D. P. Bovet und M. Cesati, O'Reilly Verlag, 2. Auflage, Dezember 2002, Seiten 348 - 371 beschrieben. Dieses Verfahren ermöglicht über die Systemaufrufe "nice()" und "setpriority()" eine Priorisierung der vom Betriebssystem quasi-parallel ausgeführten Prozesse.

Trotz aller hardwaretechnischen Fortschritte weisen tragbare Datenträger jedoch nach wie vor erheblich geringere Programmausführungsressourcen auf als andere Computer, auf denen typischerweise multitasking- und/ oder multithreadingfähige Betriebssysteme ausgeführt werden. Eine besonders ressourcenschonende Betriebsweise ist daher wünschenswert. Insbesondere sollte in diesem Zusammenhang berücksichtigt werden, dass bei tragbaren Datenträgern oftmals nur relativ wenige Prozesse zur Ausführung anstehen - in manchen Fällen nur ein einziger Prozess. Wenn der tragbare Datenträger über einen Mechanismus zum Laden oder Nachladen von Programmen verfügt, ist vorab nicht bekannt, ob im späteren Betrieb nur ein einziger Prozess - z.B. eine virtuelle Maschine - oder mehrere Prozesse ausgeführt werden.

Ferner besteht speziell bei tragbaren Datenträgern häufig das Problem, dass sicherheitskritische und/oder zeitgebundene Vorgänge auszuführen sind - z.B. kryptographische Berechnungen oder Kommunikationsvorgänge -, die nicht oder nur in eingeschränktem Maße unterbrochen werden dürfen.

Es ist daher Aufgabe der Erfindung, einen Mechanismus bereitzustellen, der eine besonders effiziente und/ oder sichere Steuerung der Programmausführung bei ressourcenbeschränkten Systemen gestattet. In manchen Ausgestaltungen der Erfindung soll dieser Mechanismus besonders an die gerade geschilderten Gegebenheiten bei tragbaren Datenträgern angepasst sein.

Erfindungsgemäß wird diese Aufgabe ganz oder zum Teil gelöst durch ein Verfahren gemäß Anspruch 1, ein ressourcenbeschränktes System gemäß Anspruch 14 und ein Computerprogrammprodukt gemäß Anspruch 15. Die abhängigen Ansprüche betreffen optionale Merkmale mancher Ausführungsformen der Erfindung.

Die Erfindung geht von der Grundüberlegung aus, einen Mechanismus vorzusehen, durch den sich das vom Betriebssystem ausgeführte Scheduling-Verfahren auf eine über die bloße Prozesspriorisierung hinausgehende Weise verändern läßt. Hierdurch sind in manchen Ausführungsformen der Erfindung tiefgreifende Veränderungen des Scheduling-Verfahrens möglich, so dass sich die Programmausführung zur Laufzeit besonders gut an die jeweiligen Gegebenheiten und Erfordernisse anpassen läßt.

In der Wortwahl des vorliegenden Dokuments soll der Begriff Prozess im weitesten Sinne verstanden werden und sowohl Prozesse umfassen, die der Ausführung eines Programms oder einer Task entsprechen, als auch Prozesse, die der Ausführung eines Threads (Ausführungspfad innerhalb eines Programms) entsprechen. Dies schließt jedoch nicht aus, dass in manchen Ausgestaltungen der Erfindung nur die erstgenannten oder nur die zweitgenannten Prozesse von einer Veränderung des Scheduling-Verfahrens betroffen sein können.

In manchen Ausgestaltungen der Erfindung kann das Scheduling-Verfahren dadurch geändert werden, dass der Scheduler komplett ausgeschaltet wird. Diese Möglichkeit kann eingesetzt werden, um eine erhebliche Performance-Steigerung zu erzielen, wenn aus Sicht des Betriebssystems nur ein einziger auszuführender Prozess vorhanden ist, also die Multitasking-Fähigkeit des Betriebssystems gar nicht benötigt wird. Dies kann beispielsweise der Fall sein, wenn der Datenträger eine virtuelle Maschine ausführt, die ihrerseits einen vom Betriebssystem unabhängigen Scheduler aufweist.

In weiteren Ausgestaltungen der Erfindung kann zur Veränderung des Scheduling-Verfahrens vorgesehen sein, die Vorgehensweise zur Auswahl des nächsten auszuführenden Prozesses bei einem Prozesswechsel zu verändern oder den Prozesswechsel vorübergehend zu deaktivieren.

In bevorzugten Ausgestaltungen ist nur besonders berechtigen Prozessen eine Veränderung des Scheduling-Verfahrens gestattet. Die Berechtigung kann dem ressourcenbeschränkten System beispielsweise in Form einer Programmcode-Signatur oder in Form einer Challenge-Response-Sequenz beim Laden eines Programms nachgewiesen werden. Zur Berechtigungsüberprüfung wird in solchen Ausgestaltungen vorzugsweise eine Authentisierung des Programmcodes und/oder des externen Terminals durchgeführt.

Das erfindungsgemäße Computerprogrammprodukt kann ein körperliches Medium mit gespeicherten Programmbefehlen sein, beispielsweise ein Halbleiterspeicher oder eine Diskette oder eine CD-ROM. Das Computerprogrammprodukt kann jedoch auch ein nicht-körperliches Medium sein, beispielsweise ein über ein Computernetzwerk übermitteltes Signal. Insbesondere kann das Computerprogrammprodukt ein Betriebssystem und/ oder einen Scheduler enthalten, das/ der im Zuge der Herstellung oder der Initialisierung oder der Personalisierung oder der Anwendung eines ressourcenbeschränkten Systems in dieses eingebracht wird/ werden.

In bevorzugten Ausgestaltungen weisen das ressourcenbeschränkte System und/oder das Computerprogrammprodukt Merkmale auf, die den oben beschriebenen und/ oder den in den abhängigen Verfahrensansprüchen genannten Merkmalen entsprechen.

Weitere Merkmale, Vorteile und Aufgaben der Erfindung gehen aus der folgenden genauen Beschreibung eines Ausführungsbeispiels und mehrerer Ausführungsalternativen hervor. Es wird auf die schematischen Zeichnungen verwiesen, in denen zeigen:
Fig.1 ein Blockdiagramm mit Funktionseinheiten eines Datenträgers nach einem Ausführungsbeispiel der Erfindung,
Fig. 2 eine schematische Darstellung des Betriebssystems und der auszuführenden Prozesse während des Betriebs des Datenträgers von Fig. 1, und
Fig. 3 eine schematische Darstellung von Datenstrukturen und des Datenflusses bei der Authentisierung eines Prozesses in dem Datenträger von Fig.1.

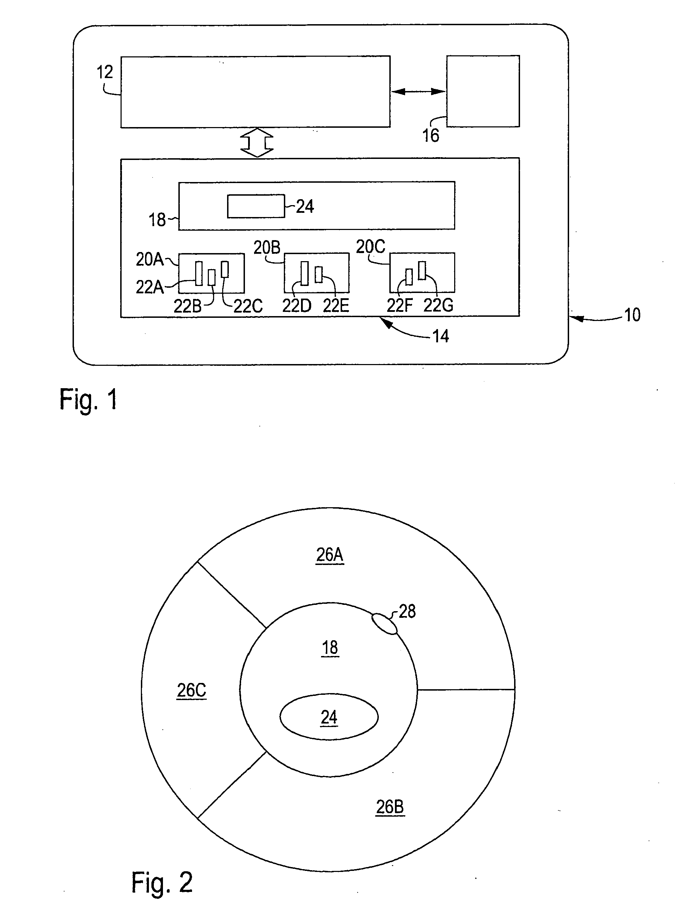

Der in Fig. 1 dargestellte Datenträger 10 weist auf einem einzigen Halbleiterchip einen Prozessor 12, einen Speicher 14 und eine Schnittstellenschaltung 16 zur kontaktlosen oder kontaktgebundenen Kommunikation auf. Der Speicher 14 ist in an sich bekannter Weise in mehrere Speicherfelder unterteilt, die z.B. als ROM, EEPROM und RAM ausgestaltet sein können.

Im Speicher 14 befindet sich Programmcode, der ein Betriebssystem 18 implementiert. Das Betriebssystem 18 ist im vorliegenden Ausführungsbeispiel eine auf den Einsatz im Datenträger 10 zugeschnittene Variante des unter der Marke Linux bekannten Betriebssystems. Insbesondere ist das Betriebssystem 18 an die erhebliche Ressourcenbeschränkung des Datenträgers 10 im Hinblick auf Rechenleistung, Speicherplatz und Peripheriegeräte angepasst.

Das Betriebssystem 18 ist im vorliegenden Ausführungsbeispiel sowohl multitasking- als auch multithreadingfähig ausgestaltet. Es können also unter Steuerung des Betriebssystems 18 mehrere im Speicher 14 befindliche Programme 20A, 20B, 20C - im folgenden zusammenfassend mit 20x bezeichnet - in getrennten Adressräumen quasi-parallel ausgeführt werden. Jedes der Programme 20x kann seinerseits mehrere Threads (Ausführungspfade) 22A - 22G - im folgenden zusammenfassend mit 22x bezeichnetaufweisen. Die Threads 22x stellen einzelne Teilaufgaben der Programme 20x dar, die ebenfalls unter Steuerung des Betriebssystems 18 quasi-parallel ausgeführt werden; dies jedoch üblicherweise in einem für alle Threads 22x eines Programms 20x einheitlichen Adressraum.

Ein Scheduler 24 steuert die Zuteilung von Programmausführungsressourcen durch das Betriebssystem 18 an die einzelnen Programme 20x und Threads 22x. Im vorliegenden Ausführungsbeispiel sind diese Programmausführungsressourcen insbesondere die zugeteilten Prozessorressourcen, also die zugeteilte Rechenzeit des Prozessors 12. In Ausführungsalternativen kann die Zuteilung weiterer Programmausführungsressourcen - z.B. der zur Verfügung gestellte Speicherplatz oder Kommunikationsressourcen - ebenfalls nach dem hier beschriebenen Verfahren gesteuert werden.

Fig. 2 zeigt schematisch, wie das Betriebssystem 18 im Zusammenwirken mit dem Scheduler 24 die Zuteilung von Rechenzeit an einzelne Prozesse 26A, 26B, 26C - im folgenden zusammenfassend mit 26x bezeichnet - steuert. Aus Gründen der übersichtlicheren Darstellung wird im vorliegenden Dokument der Begriff "Prozess" sowohl für die Ablaufstrukturen der Programme 20x als auch für die Ablaufstrukturen der Threads 22x verwendet. In manchen Ausgestaltungen werden nur die den Programmen 20x zugeordneten Prozesse 26x nach dem hier beschriebenen Verfahren verwaltet. Alternativ oder zusätzlich können die Prozesse 26x jedoch auch den einzelnen Threads 22x entsprechen; zumindest manche der Prozesse 26x sind dann in der bei UNIX-Systemen üblichen Terminologie als leichtgewichtige Prozesse (*lightweight processes*) anzusehen.

Wie in Fig. 2 angedeutet, teilt das Betriebssystem 18 unter Steuerung des Schedulers 24 den auszuführenden Prozessen 26x nach einem vordefinierten Scheduling-Verfahren Rechenzeit zu. Durch das Scheduling-Verfahren wird unter anderem bestimmt, in welcher Reihenfolge die einzelnen Prozesse 26x ausgeführt werden. Hierzu kann das Scheduling-Verfahren fest vorgegebene oder veränderliche Prioritätswerte der einzelnen Prozesse 26x auswerten. Wie eingangs bereits erwähnt, ist eine solche Priorisierung bei dem Linux-Betriebssystem durch die Systemaufrufe "nice()" und "setpriority()" vorgesehen.

Ein wesentliches Element der hier beschriebenen Ausführungsbeispiele ist, dass berechtigte Prozesse - hier z.B. der Prozess 26A - das Scheduling-Verfahren auf eine über die Prozesspriorisierung hinausgehende Weise zu verändern vermögen. Hierzu stellt das Betriebssystem 18 eine Schnittstelle 28 zur Verfügung, über die tiefgreifende Veränderungen des Scheduling-Verfahrens vorgenommen werden können. In unterschiedlichen Ausgestaltungen kann die Schnittstelle 28 entweder eine allgemeine Systemaufruf-Schnittstelle oder eine speziell zur Veränderung des Scheduling-Verfahrens vorgesehene Schnittstelle sein.

In unterschiedlichen Ausführungsformen der Erfindung können insbesondere - alternativ oder kumulativ - die folgenden Möglichkeiten zur Veränderung des Scheduling-Verfahrens durch einen berechtigten Prozess - hier z.B. den Prozess 26A - vorgesehen sein:
1) komplettes Aus- bzw. Einschalten des Schedulers 24,
2) Veränderung der Zeitscheiben bei einem präemptiven Zeitscheiben-Verfahren, z.B. durch vorübergehendes Deaktivieren des Prozesswechsels, und/ oder
3) Wechsel des Verfahrens zur Auswahl des nächsten auszuführenden Prozesses 26x bei einem Prozesswechsel.

In manchen Ausführungsformen kann zusätzlich oder alternativ die Möglichkeit bestehen, ein frei definiertes Scheduling-Verfahren, das z.B. hinsichtlich der Sicherheit optimiert ist, über die Schnittstelle 28 zu parametrisieren.

Alternative 1) gemäß der obigen Aufzählung betrifft das völlige Aus- bzw. Einschalten des Schedulers 24 und aller damit verbundenen Betriebssystem-Prozesse. Ein solches Ausschalten setzt natürlich voraus, dass die Multitasking- und/ oder Multithreading-Funktionalität des Betriebssystems 18 nicht benötigt wird. Dies kann insbesondere dann der Fall sein, wenn für das Betriebssystem 18 nur ein einziger auszuführender Prozess vorliegt. In diesem Fall ergibt sich eine erhebliche Performance-Steigerung bei der Ausführung dieses Prozesses, wenn der Scheduler 24, der beträchtliche Ressourcen sowohl im Hinblick auf die Prozessorleistung als auch im Hinblick auf den RAM-Speicher benötigt, vollständig ausgeschaltet wird.

Ein Anwendungsbeispiel für die gerade beschriebene Optimierung durch völliges Ausschalten des Schedulers 24 ist ein Datenträger 10, der als einzigen aus Sicht des Betriebssystems 18 auszuführenden Prozess eine Laufzeitumgebung mit einer virtuellen Maschine oder einem Interpreter, z.B. einer *Java Card™ Virtual Machine,* aufweist. Diese virtuelle Maschine übernimmt selbst das Scheduling zwischen verschiedenen Threads eines zu interpretierenden Pseudocode-Programms. Da der Scheduler 24 des Betriebssystems 18 in diesem Fall nicht mehr erforderlich ist, kann er ausgeschaltet werden, wodurch die zur Ausführung der Laufzeitumgebung verfügbaren Ressourcen des Datenträgers 10 erheblich zunehmen.

Ein Anwendungsfall für die oben genannte Alternative 2), nämlich eine vorübergehende Deaktivierung des Prozesswechsels, liegt beispielsweise dann vor, wenn einzelne Prozesse 26x aus Sicherheitsgründen nicht unterbrochen werden sollen. So kann es beispielsweise zum Schutz vor Seitenkanal-Angriffen erforderlich sein, einen Thread 22x, der z.B. eine kryptographische Berechnung ausführt, nicht zu unterbrechen. In diesem Fall kann durch einen geeigneten Betriebssystem-Aufruf der Prozesswechsel kurzfristig deaktiviert werden, um einen ungestörten Ablauf desjenigen Threads 22x, der den kritischen Code beinhaltet, sicherzustellen.

Auch zur Implementierung eines zeitkritischen Kommunikationsprotokolls, das feste Antwortzeiten erfordert, kann der Prozesswechsel vorübergehend deaktiviert werden. Es ist jedoch auch möglich, durch eine andere Modifikation des Scheduling-Verfahrens eine hinreichend kurze Reaktionszeit desjenigen Threads 22x, der den Kommunikationskanal bedient, sicherzustellen.

Als weiteres Anwendungsszenario ist die Ausführung von nicht-reentranten Funktionen zu nennen. Dies sind Programmstücke, deren Ausführung in unterschiedlichen Threads 22x keine zeitliche Überlappung aufweisen darf. Auch hier kann vor Beginn der Ausführung einer nicht-reentranten Funktion der Scheduler 24 vorübergehend deaktiviert und danach wieder freigegeben werden.

Alternative 3) der obigen Aufzählung betrifft den Wechsel des zur Auswahl des nächsten Prozesses 26x dienenden Verfahrens. Generell kann das Auswahlverfahren sowohl bei kooperativem als auch bei präemptivem Multitasking auf einer an sich bekannten Vorgehensweise oder einer Kombination mehrerer an sich bekannter Vorgehensweisen basieren. Solche Vorgehensweisen sind beispielsweise:
a) Wechsel zu demjenigen Prozess 26x, der an vorderster Stelle einer Prozesswarteschlange steht (*First Come First Serve),*
b) Wechsel zum kürzesten anstehenden Prozess 26x (*Shortest Job Firs*t)*,*
c) Wechsel zu dem Prozess 26x mit der kürzesten Restlaufzeit (*Shortest Remaining Time First*)*,* und/ oder
d) zyklischer Prozesswechsel in einer festgelegten Reihenfolge (*Round Robin*)*.*

Wie bereits erwähnt, sollen in manchen Ausgestaltungen der Erfindung nur besonders autorisierte Prozesse 26x über die Schnittstelle 28 das Scheduling-Verfahren verändern dürfen. Um festzustellen, ob ein gegebener Prozess 26x zur Veränderung des Scheduling-Verfahrens berechtigt ist, kann eine Authentisierung durchgeführt werden. In manchen Ausgestaltungen wird zur Authentisierung eines Prozesses 26x eine Codesignatur des diesen Prozess 26x definierenden Programmcodes - also des Programms 20x oder des Threads 22x - verifiziert.

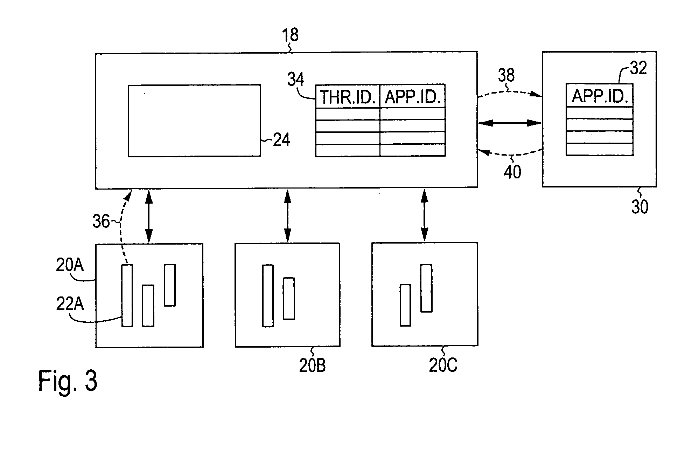

Alternativ oder zusätzlich kann die Authentisierung im Zusammenhang mit dem Laden des Programmcodes in den Datenträger 10 erfolgen. Fig. 3 zeigt ein Ladeprogramm 30, das den Ladevorgang von Programmen 20x in den Datenträger 10 steuert. Das Ladeprogramm 30 führt bei jedem Ladevorgang eines Programms 20x eine Authentisierung durch. Diese Authentisierung kann z.B. durch ein Challenge-Response-Verfahren erfolgen, das zwischen dem Ladeprogramm 30 und einem externen Terminal ausgeführt wird. Wenn beim Laden eines Programms 20x dessen Berechtigung zur Modifikation des Schedulers 24 nachgewiesen wurde, wird eine entsprechende Programmkennung (APP.ID.) in eine vom Ladeprogramm 30 verwaltete Rechtetabelle 32 eingetragen.

Allgemein benötigt bei den gerade geschilderten Ausführungsformen das Betriebssystem 18 und/oder das Ladeprogramm 30 während der Programmausführung eine Möglichkeit, von einem laufenden Thread 22x auf das zugeordnete Programm 20x bzw. auf dessen Berechtigung zur Veränderung des Scheduling-Verfahrens zu schließen. In dem in Fig. 3 dargestellten Ausführungsbeispiel unterhält das Betriebssystem 18 dazu eine Verwaltungstabelle 34, in der Kennungen aller gegenwärtig ablaufender Threads 22x (THR.ID.) eingetragen und den Kennungen der Programme 20x (APP.ID.) zugeordnet werden.

Wenn nun z.B. ein Thread 22A eine Modifikation des Scheduling-Verfahrens anfordert (Pfeil 36), so ermittelt das Betriebssystem 18 zunächst durch eine Nachfrage beim Ladeprogramm 30, ob der Thread 22A zu einer solchen Modifikation berechtigt ist. Hierzu setzt das Betriebssystem 18 durch einen Zugriff auf die Verwaltungstabelle 34 den Bezeichner des Threads 22A in den Bezeichner des entsprechenden Programms 20A um und übermittelt letzteren an das Ladeprogramm 30 (Pfeil 38). Das Ladeprogramm 30 bestimmt durch einen Zugriff auf die Rechtetabelle 32, ob das Programm 20A - und damit auch dessen Thread 22A - zur Änderung des Scheduling-Verfahrens berechtigt ist. Nur wenn das Ladeprogramm 30 die Berechtigung bestätigt (Pfeil 40), wird die gewünschte Änderung des Scheduling-Verfahrens durchgeführt.

Bei dem gerade beschriebenen Ausführungsbeispiel verwaltet also das Ladeprogramm 30 die Rechte der im Datenträger 10 befindlichen Programme 20x, während das Betriebssystem 18 eine Zuordnung zwischen dem laufenden Thread 22A und dem entsprechenden Programm 20A vornimmt. Diese Zuordnung - z.B. mittels der Verwaltungstabelle 34 - setzt voraus, dass das Betriebssystem 18 beim Laden eines Programms 20x vom Ladeprogramm 30 informiert wird. In Ausführungsalternativen kann dagegen das Ladeprogramm 30 die Verwaltungstabelle 34 oder eine ähnliche Tabelle verwalten, wenn das Ladeprogramm 30 vom Betriebssystem 18 über die jeweils ausgeführten Threads 22x informiert wird.

## Patentansprüche

1. Verfahren zur Steuerung der Programmausführung in einem ressourcenbeschränkten System, insbesondere einem tragbaren Datenträger (10), wobei das ressourcenbeschränkte System ein multitasking- und/ oder multithreadingfähiges Betriebssystem (18) und mindestens einen auszuführenden Prozess (26x) aufweist und wobei das Betriebssystem (18) gemäß einem Scheduling-Verfahren jedem auszuführenden Prozess (26x) Programmausführungsressourcen zuteilt,
**dadurch gekennzeichnet, dass** in Reaktion auf eine Anforderung eines berechtigten Prozesses (26x) das Scheduling-Verfahren auf eine über eine Prozesspriorisierung hinausgehende Weise verändert wird.

2. Verfahren nach Anspruch 1, **dadurch gekennzeichnet, dass** das Betriebssystem (18) einen Scheduler (24) aufweist, unter dessen Steuerung das Scheduling-Verfahren ausgeführt wird..

3. Verfahren nach Anspruch 2, **dadurch gekennzeichnet, dass** die Veränderung des Scheduling-Verfahrens ein Ausschalten des Schedulers (24) umfasst.

4. Verfahren nach Anspruch 3, **dadurch gekennzeichnet, dass** der Scheduler (24) ausgeschaltet wird, wenn für das Betriebssystem (18) nur ein einziger auszuführender Prozess (26x) vorhanden ist.

5. Verfahren nach Anspruch 4, **dadurch gekennzeichnet, dass** der einzige auszuführende Prozess (26x) eine Laufzeitumgebung einer virtuellen Maschine ist.

6. Verfahren nach einem der Ansprüche 1 bis 5, **dadurch gekennzeichnet, dass** die Veränderung des Scheduling-Verfahrens eine Veränderung der Zeitscheiben bei einem preemptiven Scheduling-Verfahren umfasst.

7. Verfahren nach einem der Ansprüche 1 bis 6, **dadurch gekennzeichnet, dass** die Veränderung des Scheduling-Verfahrens ein vorübergehendes Deaktivieren des Prozesswechsels umfasst.

8. Verfahren nach einem der Ansprüche 1 bis 7, **dadurch gekennzeichnet, dass** die Veränderung des Scheduling-Verfahrens eine Veränderung der Auswahl des nächsten auszuführenden Prozesses (26x) bei einem Prozesswechsel umfasst.

9. Verfahren nach einem der Ansprüche 1 bis 8, **dadurch gekennzeichnet, dass** die Veränderung des Scheduling-Verfahrens eine Auswahl eines von mehreren vordefinierten Scheduling-Verfahren umfasst.

10. Verfahren nach einem der Ansprüche 1 bis 9, **dadurch gekennzeichnet, dass** eine Authentisierung durchgeführt wird, um die Berechtigung eines Prozesses (26x) zur Veränderung des Scheduling-Verfahrens festzustellen.

11. Verfahren nach Anspruch 10, **dadurch gekennzeichnet, dass** die Authentisierung eine Überprüfung einer Programmcode-Signatur umfasst.

12. Verfahren nach Anspruch 10 oder Anspruch 11, **dadurch gekennzeichnet, dass** die Authentisierung im Zusammenhang mit dem Laden eines Programms (20x) in das ressourcenbeschränkte System durchgeführt wird.

13. Verfahren nach einem der Ansprüche 1 bis 12, **dadurch gekennzeichnet, dass** das Betriebssystem ein UNIX-artiges Betriebssystem, insbesondere ein Linux-Betriebssystem ist.

14. Ressourcenbeschränktes System, insbesondere tragbarer Datenträger (10), mit einem Prozessor (12) und mindestens einem Speicher (14), wobei der Speicher (14) Programmbefehle enthält, die den Prozessor (12) zur Ausführung eines Verfahrens nach einem der Ansprüche 1 bis 13 veranlassen.

15. Computerprogrammprodukt, das maschinenlesbare Programmbefehle für einen Prozessor (12) eines ressourcenbeschränkten Systems aufweist, die den Prozessor (12) zur Ausführung eines Verfahrens nach einem der Ansprüche 1 bis 13 veranlassen.
